# EUROPEAN PATENT APPLICATION

(11) **EP 4 708 518 A1**
(43) Date of publication of application: **11.03.2026**
(21) Application number: 24840013.7
(22) Date of filing: 05.07.2024
(51) Int. Cl.: H01M 50/262, H01M 50/204, H01M 50/271

(54) **FASTENING MECHANISM, AND BATTERY PACK INCLUDING FASTENING MECHANISM**

(30) Priority: 07.07.2023 KR 20230088509
(71) Applicant: LG Energy Solution, Ltd., Seoul 07335 (KR)
(72) Inventor: KANG, Da Hoon, Daejeon 34122 (KR)
(74) Representative: Plasseraud IP
(86) International application number: PCT/KR2024/009609
(87) International publication number: WO 2025/014201

(57) **Abstract**

A coupling mechanism according to an embodiment of the present invention may include a head part, a screw part provided to be coupled to the head part, and a bonding member which is disposed along an outer circumference of the head part on the screw part and is melted when a temperature of the bonding member is equal to or greater than a predetermined temperature.

## Description

### TECHNICAL FIELD

### CROSS-REFERENCE TO RELATED APPLICATION

The present application claims the benefit of the priority of Korean Patent Application No. 10-2023-0088509, filed on July 7, 2023, which is hereby incorporated by reference in its entirety.

### TECHNICAL FIELD

The present invention relates to a coupling mechanism and a battery pack including the same.

### BACKGROUND ART

Research and development on power generation based on Eco-friendly energy sources are being conducted to solve the problem of environmental pollution and energy source problems caused by the depletion of the petroleum resources. Particularly, research on secondary batteries is actively conducted, and research is being conducted on various aspects of secondary batteries, such as materials, structures, processes, and stability.

A plurality of secondary batteries may be installed and managed as a unit of a module or pack and undergo repeated charging and discharging processes, and a voltage applied to the secondary batteries is increasing to improve energy density. Thus, an internal pressure of the battery module or battery pack may increase due to ignition or gas generation, so it is necessary to secure stability through appropriate control.

According to the related art, there is a possibility that structural stability problems could occur due to insufficient safety devices against the ignition or gas generation.

### DISCLOSURE OF THE INVENTION

### TECHNICAL PROBLEM

An object of the present invention for solving the above problems is to provide a coupling mechanism capable of improving structural stability and a battery pack including the coupling mechanism.

### Technical solution

A coupling mechanism according to an embodiment of the present invention may include a head part, a screw part provided to be coupled to the head part, and a bonding member which is disposed along an outer circumference of the head part on the screw part and is melted when a temperature of the bonding member is equal to or greater than a predetermined temperature.

A battery pack according to an embodiment of the present invention may include an accommodation frame provided to accommodate batteries, a cover lid coupled to the accommodation frame and configured to cover an opened upper portion of the accommodation frame, and a coupling mechanism configured to couple the accommodation frame to the cover lid, wherein the coupling mechanism may include a head part coupled to the cover lid, a screw part coupled to the head part and fixed to the accommodation frame, and a bonding member which is disposed along an outer circumference of the head part on the screw part and is melted when a temperature of the bonding member is equal to or greater than a predetermined temperature.

### ADVANTAGEOUS EFFECTS

According to the preferred embodiment of the present invention, the structural stability may be improved when internal ignition or the high-temperature gas is generated.

### BRIEF DESCRIPTION OF THE DRAWINGS

FIG. 1 is a plan view illustrating a structure of a battery pack according to an embodiment of the present invention.
FIG. 2 is a side cross-sectional view illustrating of the structure of the battery pack according to an embodiment of the present invention.
FIG. 3 is a perspective view of a coupling mechanism according to an embodiment of the present invention.
FIG. 4 is an exploded perspective view illustrating a state when the coupling mechanism is viewed in one direction according to an embodiment of the present invention.
FIG. 5 is an exploded perspective view illustrating a state when the coupling mechanism is viewed in another direction according to an embodiment of the present invention.
FIG. 6 is a side view illustrating a state in which the coupling mechanism is separated from the battery pack according to an embodiment of the present invention.
FIG. 7 is a side view illustrating a state in which the coupling mechanism is separated according to an embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

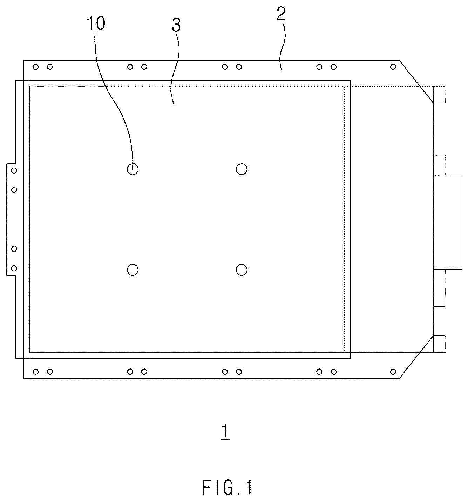

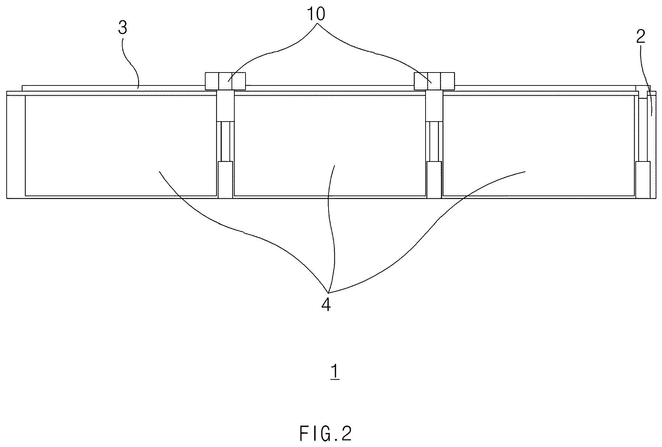

FIG. 1 is a plan view illustrating a structure of a battery pack according to an embodiment of the present invention, and FIG. 2 is a side cross-sectional view illustrating of the structure of the battery pack according to an embodiment of the present invention.

A battery pack 1 may include an accommodation frame 2. The accommodation frame 2 may accommodate secondary batteries therein. The accommodation frame 2 may form at least a portion of an outer surface of the battery pack 1.

The battery pack 1 may include a cover lid 3. The cover lid 3 may form an outer surface of an upper portion of the battery pack 1.

The cover lid 3 may be coupled to the accommodation frame 2 to cover an opened upper portion of the accommodation frame 2.

The battery pack 1 may include a coupling mechanism 10. The coupling mechanism 10 may connect the accommodation frame 2 to the cover lid 3. For example, a portion of the coupling mechanism 10 may be coupled to the cover lid 3, and the other portion of the coupling mechanism 10 may be coupled to the accommodation frame 2.

The battery pack 1 may include an accommodation part 4. The accommodation part 4 may be provided to accommodate the secondary batteries. The accommodation part 4 may be defined by the accommodation frame 2 and the cover lid 3.

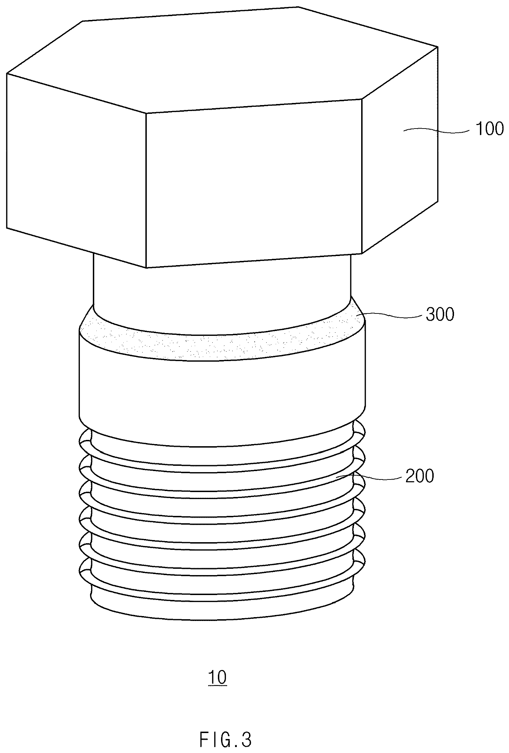

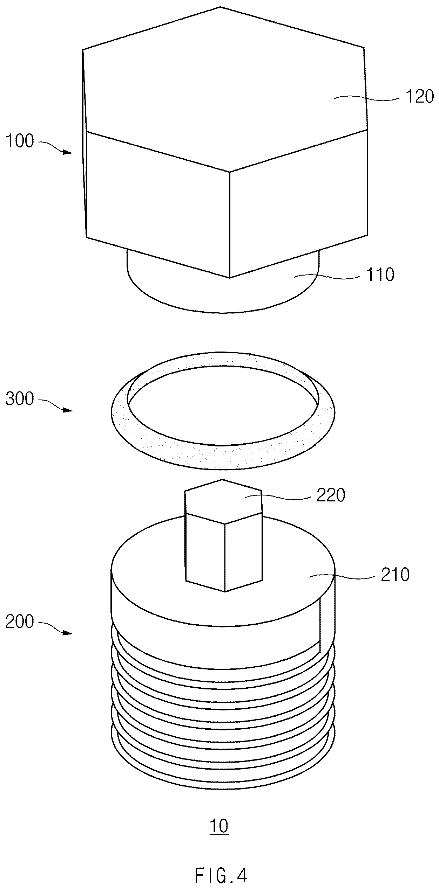

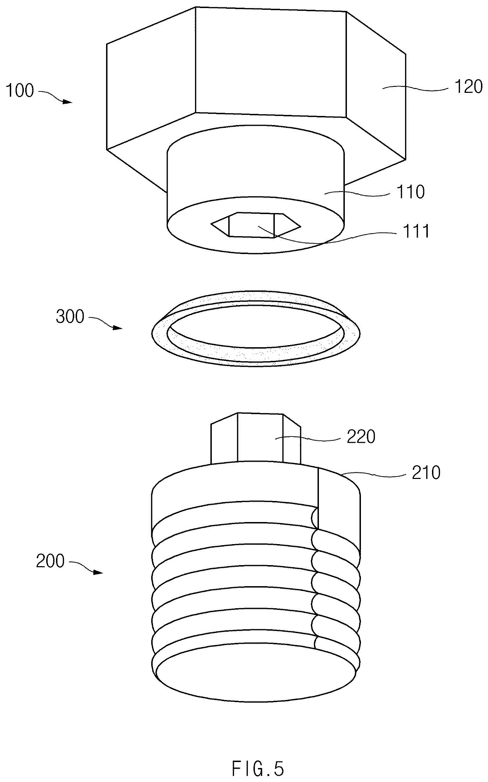

FIG. 3 is a perspective view of the coupling mechanism according to an embodiment of the present invention, FIG. 4 is an exploded perspective view illustrating a state when the coupling mechanism is viewed in one direction according to an embodiment of the present invention, and FIG. 5 is an exploded perspective view illustrating a state when the coupling mechanism is viewed in another direction according to an embodiment of the present invention. The description of the foregoing embodiments may be applied identically or similarly to these embodiments.

The coupling mechanism 10 may include a head part 100.

The head part 100 may include a first coupling part 110. For example, the first coupling part 110 may be provided at a side that is coupled to a screw part 200 of the coupling mechanism 10.

The head part 100 may include a bolt head 120. For example, the bolt head 120 may be provided in a polygonal shape at an opposite side of the first coupling part 110.

An insertion groove 111 may be formed in the first coupling part 110. For example, the insertion groove 111 may be recessed in a polygonal shape. Specifically, the insertion groove 111 may be recessed so that the screw part 200 is inserted.

The coupling mechanism 10 may include the screw part 200.

The screw part 200 may be provided to be coupled to the head part 100. For example, a portion of the screw part 200 (e.g., a protrusion 220 of the second coupling part 210) may be inserted into and coupled to the insertion groove 111 of the head part 100.

The screw part 200 may include a second coupling part 210. The second coupling part 210 may be coupled to the first coupling part 110.

The protrusion 220 may be disposed on the second coupling part 210. For example, the second coupling part 210 may be provided with a protrusion protruding in a polygonal shape as to be inserted into the insertion groove 111.

The coupling mechanism 10 may include a bonding member 300.

The bonding member 300 may couple the head part 100 to the screw part 200. For example, the bonding member 300 may bond the head part 100 to the screw part 200 to couple the head part 100 to the screw part 200.

The bonding member 300 may be disposed along an outer circumference of the head part 100. For example, the bonding member 300 may be disposed along an outer circumference of the first coupling part 111.

The bonding member 300 may be disposed on the screw part 200. For example, the bonding member 300 may be disposed along the outer circumference of the first coupling part 110 on the second coupling part 210.

The bonding member 300 may be melted when reaching a predetermined temperature or more. For example, if a temperature of the battery pack 1 rises, and thus, the temperature of the bonding member 300 becomes higher than the predetermined temperature, the bonding member 300 may be melted. When the bonding member 300 is melted, the coupling between the head part 100 and the screw part 200 may be released.

An outer diameter of the second coupling part 210 may be greater than an outer diameter of the first coupling part 110. For example, when the protrusion 220 is inserted into the insertion groove 111 of the first coupling part 110, the first coupling part 110 may be seated on the second coupling part 210. Here, the outer diameter of the second coupling part 210 may be greater than the outer diameter of the first coupling part 110, and thus, a place on which the bonding member 300 is disposed may be provided.

The bonding member 300 may not protrude to the outside of the second coupling part 210. For example, the outer diameter of the bonding member 300 may have a size that is greater than or equal to the outer diameter of the first coupling part 110 and less than or equal to the outer diameter of the second coupling part 210.

The bonding member 300 may be in the form of a circular band. For example, the bonding member 300 may be in the form of the circular band that is provided to surround the first coupling part 110 on the second coupling part 210. Here, the bonding member 300 may be supported by the second coupling part 210.

In the bonding member 300, an outer diameter at a side of the first coupling part 110 may be greater than an outer diameter at a side of the second coupling part 210. For example, the bonding member 300 may have a shape in which the outer diameter gradually increases in a direction from the first coupling part 110 toward the second coupling part 210.

The bonding member 300 may be bonded to cover a predetermined area of the second coupling part 210. For example, the bonding member 300 may cover an area that is visible from the outside on the area facing the head part 100 of the second coupling part 210 when the first coupling part 110 and the second coupling part 210 are coupled to each other.

The bonding member 300 may be bonded through brazing welding. For example, the bonding member 300 may be bonded to the first coupling part 110 and the second coupling part 210 by the brazing welding.

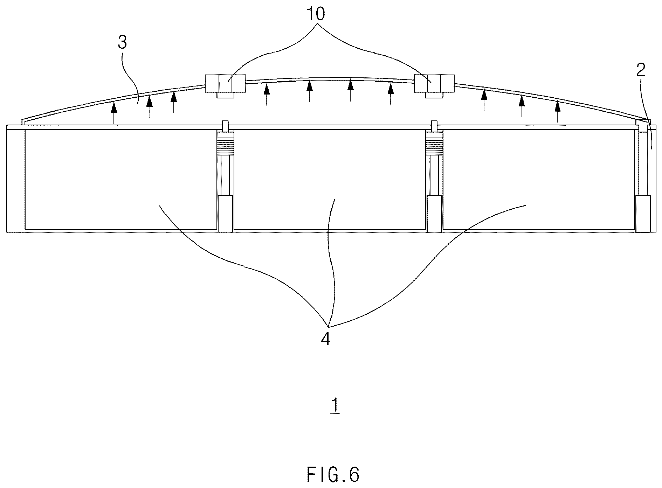

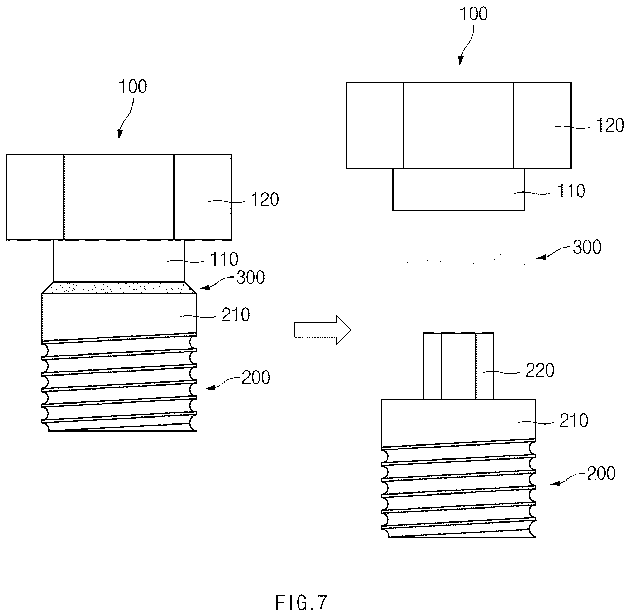

FIG. 6 is a side view illustrating a state in which the coupling mechanism is separated from the battery pack according to an embodiment of the present invention, and FIG. 7 is a side view illustrating a state in which the coupling mechanism is separated according to an embodiment of the present invention. The description of the foregoing embodiments may be applied identically or similarly to these embodiments.

The coupling of the accommodation frame 2 and the cover lid 3 may be released under certain circumstances. For example, the coupling of the accommodation frame 2 and the cover lid 3 may be released when a temperature exceeds a predetermined temperature, and thus, the bonding member 300 is melted. Specifically, when the bonding member 300 is melted at a predetermined temperature or more, the head part 100 and the screw part 200 may be in a state of being separated from each other. Here, when an internal pressure of the accommodation part 4 increases, the cover lid 3 may move in a direction in which a pressure is applied according to the internal pressure.

As described above, if the cover lid 3 is movable due to an internal situation of the accommodation part 4 (e.g., ignition, gas generation, etc.), the pressure in the accommodation part 4 may be relieved. Thus, structural stability may be improved in the event of the internal ignition or high-temperature gas generation in the battery pack 1.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

1: Battery pack
2: Accommodation frame
3: Cover lid
4: Accommodation part
10: Coupling mechanism
100: Head part
110: First coupling part
111: Insertion groove
120: Bolt head
200: Screw part
210: Second coupling part
220: Protrusion
300: Bonding member

## Claims

1. A coupling mechanism comprising:
a head part;
a screw part provided to be coupled to the head part; and
a bonding member which is disposed along an outer circumference of the head part on the screw part and is melted when a temperature of the bonding member is equal to or greater than a predetermined temperature.

2. The coupling mechanism of claim 1, wherein the head part comprises a first coupling part at a side coupled to the screw part,
the screw part comprises a second coupling part coupled to the first coupling part, and
the bonding member is disposed along an outer circumference of the first coupling part on the second coupling part.

3. The coupling mechanism of claim 2, wherein an outer diameter of the bonding member is greater than an outer diameter of the first coupling part and is equal to or less than an outer diameter of the second coupling part.

4. The coupling mechanism of claim 1, wherein the bonding member is provided in the form of a circular band.

5. The coupling mechanism of claim 2, wherein, in the bonding member, an outer diameter at a side of the second coupling part is greater than an outer diameter at a side of the first coupling part.

6. The coupling mechanism of claim 2, wherein the bonding member is configured to cover an area that is visible from the outside on an area facing the head part of the second coupling part when the first coupling part and the second coupling part are coupled to each other.

7. The coupling mechanism of claim 2, wherein the head part comprises a bolt head provided in a polygonal shape at an opposite side of the first coupling part,
an insertion groove recessed in a polygonal shape is defined in the first coupling part, and
a protrusion protruding in a polygonal shape is disposed on the second coupling part so as to be inserted into the insertion groove.

8. The coupling mechanism of claim 2, wherein the bonding member is bonded to the first coupling part and the second coupling part by brazing welding.

9. The coupling mechanism of claim 2, wherein an outer diameter of the second coupling part is greater than an outer diameter of the first coupling part.

10. A battery pack comprising:
an accommodation frame provided to accommodate batteries;
a cover lid coupled to the accommodation frame and configured to cover an opened upper portion of the accommodation frame; and
a coupling mechanism configured to couple the accommodation frame to the cover lid,
wherein the coupling mechanism comprises:
a head part coupled to the cover lid;
a screw part coupled to the head part and fixed to the accommodation frame; and
a bonding member which is disposed along an outer circumference of the head part on the screw part and is melted when a temperature of the bonding member is equal to or greater than a predetermined temperature.

11. The battery pack of claim 10, wherein the head part comprises a first coupling part at a side coupled to the screw part,
the screw part comprises a second coupling part coupled to the first coupling part, and
the bonding member is disposed along an outer circumference of the first coupling part on the second coupling part.

12. The battery pack of claim 11, wherein an outer diameter of the second coupling part is greater than an outer diameter of the first coupling part.

13. The battery pack of claim 10, wherein the coupling of the accommodation frame and the cover lid is released when a temperature of the bonding member is equal to or greater than a predetermined temperature so that the bonding member is melted.
